# EUROPÄISCHE PATENTANMELDUNG

(11) **EP 1 336 815 A2**
(43) Veröffentlichungstag der Anmeldung: **20.08.2003**
(21) Anmeldenummer: 03008154.1
(22) Anmeldetag: 12.04.2001
(51) Int. Cl.: G01B 7/012

(54) **Abtasteinrichtung zum Vermessen einer Fertigungsmaschine**

(30) Priorität: 12.04.2000 DE 10018214
(62) Teilanmeldung aus: 01109313.5
(71) Anmelder: Dreier Technology AG, 7000 Chur (CH)
(72) Erfinder: Dreier, Horst, 72160 Horb-Bittelbronn (DE)
(74) Vertreter: Dreiss, Fuhlendorf, Steimle & Becker

(57) **Zusammenfassung**

Es wird eine Abtasteinrichtung zum Vermessen von Fertigungsmaschinen mit Gelenkstabkinematik vorgeschlagen mit deren Hilfe das Vermessen vereinfacht, verbessert und vereinheitlicht wird.

## Beschreibung

Die Erfindung betrifft eine Abstasteinrichtung zum Vermessen einer Fertigungsmaschine.

Fertigungsmaschinen müssen nach der Montage und nach dem Aufstellen beim Kunden vermessen werden, um zu gewährleisten, dass sie die geforderte Genauigkeit in allen Punkten des Bearbeitungsraums erfüllen. Dies trifft in besonderem Maße auf Fertigungsmaschinen mit Gelenkstabkinematik, wie beispielsweise Tripoden oder Hexapoden, zu, da die Werkzeugspindel nicht entlang von fest vorgegebenen Werkzeugachsen geführt wird, sondern jede Vorschubbewegung der Werkzeugspindel durch eine Überlagerung der Bewegung sämtlicher Linearachsen erzeugt wird.

Der Erfindung liegt die Aufgabe zugrunde, das Vermessen von Fertigungsmaschinen, insbesondere von Fertigungsmaschinen mit Gelenkstabkinematik, zu vereinfachen, zu verbessern und zu vereinheitlichen.

Diese Aufgabe wird erfindungsgemäß gelöst durch eine Abtasteinrichtung zum Vermessen einer Lehre, mit einer Aufnahme und mit einem Messdorn, wobei in dem Messdorn rechtwinklig zur Drehachse der Werkzeugspindel zwei Neigungssensoren angeordnet sind, wobei die Neigungssensoren zueinander rechtwinklig angeordnet sind, und wobei an dem Messdorn eine Einrichtung zum Messen der Position der Abtasteinrichtung vorgesehen, so dass aus den Messwerten der Ort des Werkzeugträgerreferenzpunkts T und die Richtung der Drehachse der Werkzeugspindel berechnet werden kann. Durch den Vergleich mit den Sollwerten können die Ungenauigkeiten der Fertigungsmaschine ermittelt und ggf. kompensiert werden.

Bei einer Variante der Erfindung ist vorgesehen, dass die Einrichtung zum Messen der Position der Abtasteinrichtung aus drei Messtastern besteht, und dass die Messtaster zueinander rechtwinklig angeordnet sind, so dass die Position der Abstasteinrichtung und damit auch des Werkzeugträgerreferenzpunkts der Fertigungsmaschine mit höchster Genauigkeit ermittelt werden kann.

In weiterer Ergänzung der Erfindung ist der Messbolzen der Messtaster konzentrisch zu einer Längenmesseinrichtung angeordnet, so dass die Baulänge der Messtaster verringert wird und somit auch Lehren mit nahe beieinander angeordneten Messkörpern ohne Probleme vermessen werden können.

Eine weitere Ausgestaltung der Erfindung sieht vor, dass der Messbolzen einen fest mit dem Messbolzen verbundenen Ferritstab aufweist, und dass der Ferritstab in eine Spule eintaucht. Aus der Eintauchtiefe des Ferritstabs kann die Position des Messbolzens auf einfache und dennoch präzise Weise bestimmt werden.

Vorteilhafter Weise wird die Abtasteinrichtung mittel einer Kugelführung geführt, da diese Art der Führung sehr genau ist und eine sehr geringe Losbrechkraft hat.

Bei einer anderen Ausgestaltung der Erfindung besteht die Einrichtung zum Messen der Position der Abtasteinrichtung aus einem mit einer ortsfest installierten Laserquelle zusammenwirkenden Tripel-Reflektor, so dass die Genauigkeit der Fertigungsmaschine an beliebigen Punkten in deren Bearbeitungsraum geprüft werden kann und keine Lehre zum Vermessen der Fertigungsmaschine erforderlich ist.

Weitere Vorteile und vorteilhafte Ausgestaltungen der Erfindung sind der nachfolgenden Beschreibung, der Zeichnung und den Patentansprüchen entnehmbar.

Ausführungsbeispiele des Gegenstands der Erfindung sind in der Zeichnung dargestellt und im Folgenden näher beschrieben. Es zeigen:
- Fig. 1:: eine Fertigungsmaschine mit Gelenkstabkinematik;
- Fig. 2:: die Fertigungsmaschine in einer anderen Arbeitsposition;
- Fig. 3:: eine erfindungsgemäße Abtasteinrichtung in einer Werkzeugspindel;
- Fig. 4:: eine detaillierte Darstellung der Messtaster einer Abtasteinrichtung.

Im Folgenden werden für gleiche Bauteile in den Figuren gleiche Bezugszeichen verwandt. Es gilt das anhand einer Figur Erläuterte für die anderen Figuren entsprechend.

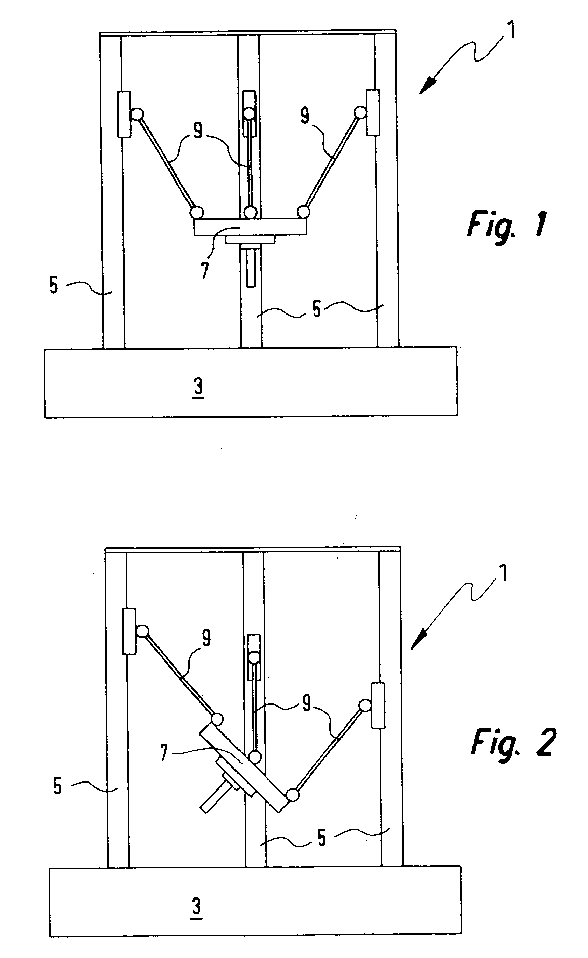

In Fig. 1 ist eine Fertigungsmaschine 1 mit Gelenkstabkinematik schematisch dargestellt. Die Fertigungsmaschine 1 besteht aus einem Maschinentisch 3, mehreren Lineareinheiten 5 und einer Werkzeugspindel 7. Die Werkzeugspindel 7 ist über Gelenkstäbe 9 mit den Lineareinheiten 5 gekoppelt. Durch geeignetes Verfahren der Lineareinheiten 5 kann die Werkzeugspindel 7 innerhalb des oberhalb des Maschinentisches 3 befindlichen Bearbeitungsraums der Fertigungsmaschine 1 nahezu jede beliebige Position und Richtung einnehmen. Dadurch können auch sehr komplexe Geometrien hergestellt werden.

Die Genauigkeit der Werkstücke hängt ganz entscheidend vom Zusammenspiel der Lineareinheiten 5, der dazu benötigten numerischen Steuerung und der Kinematik der Fertigungsmaschine 1 ab.

In Fig. 2 ist eine andere Position und Richtung der Werkzeugspindel 7 dargestellt. Durch den Vergleich der Fig. 1 und 2 wird deutlich, dass Positions- und/oder Richtungsänderungen der Werkzeugspindel 7 ein Zusammenwirken aller Lineareinheiten 5 erfordern.

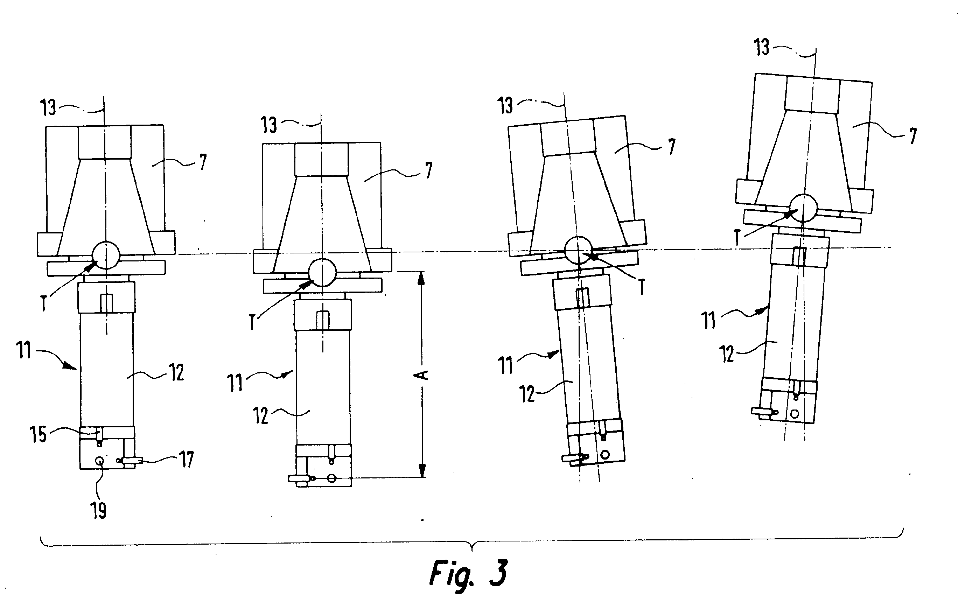

In Fig. 3 ist eine Werkzeugspindel 7 mit einer daran befestigten Abtasteinrichtung 11 in vier verschiedenen Positionen dargestellt. Die Werkzeugspindel 7 wird im Wesentlichen durch ihren Werkzeugträgerbezugspunkt T, und die Richtung ihrer Drehachse 13 festgelegt.

Die Abtasteinrichtung 11 weist an dem unteren Ende ihres Messdorns 12 drei senkrecht zueinander angeordnete Messtaster 15, 17 und 19 auf. Der Messdorn 12 ersetzt einen üblichen runden Messdorn, da davon ausgegangen werden muss, dass sich die Werkzeugspindel 7 aufgrund der Toleranzen der Fertigungsmaschine 1 an jedem Punkt innerhalb des Bearbeitungsraums anders neigt.

Wenn die Abtasteinrichtung mit seinen Messtastern 15, 17 und 19 an einen in Fig. 3 nicht dargestellten Messkörper angefahren wird, kann aus den Messwerten der Messtaster 15, 17 und 19 bei bekanntem Abstand A zwischen Werkzeugträgerreferenzpunkt T und den Messtastern 15, 17 und 19 die Lage des Werkzeugträgerreferenzpunkts T berechnet werden. Allerdings ist zur genauen Berechnung des Werkzeugträgerreferenzpunkts T noch die Kennntis der Richtung der Drehachse 13 der Werkzeugspindel 7 erforderlich. Zu diesem Zweck sind in den Messdorn 12 zwei in Fig. 3 nicht dargestellte hochpräzise Neigungsmesser angeordnet. Jeder Neigungsmesser misst jeder in einer Ebene, die parallel zur Drehachse 13 und senkrecht zu der Messebene des jeweils anderen Neigungsmessers verläuft.

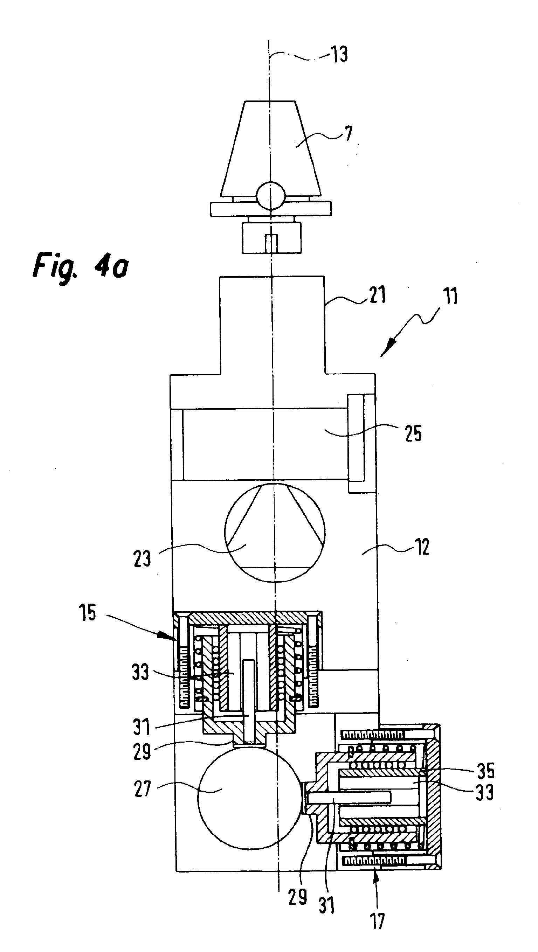

In Fig. 4a ist eine erste Ausführungsform einer erfindungsgemäßen Abtasteinrichtung 11 etwas detaillierter dargestellt. Die Abtasteinrichtung 11 wird über eine zylindrische Aufnahme 21 in der nicht maßstäblich und nur schematisch dargestellten Werkzeugspindel 7 aufgenommen. Im oberen Bereich des Messdorns 12 sind die zwei senkrecht zueinander angeordneten Neigungsmesser 23 und 25 schematisch dargestellt. Aus den Messwerten der Neigungsmesser 23 und 25 kann die Richtung der Drehachse 13 der Werkzeugspindel 7 exakt bestimmt werden.

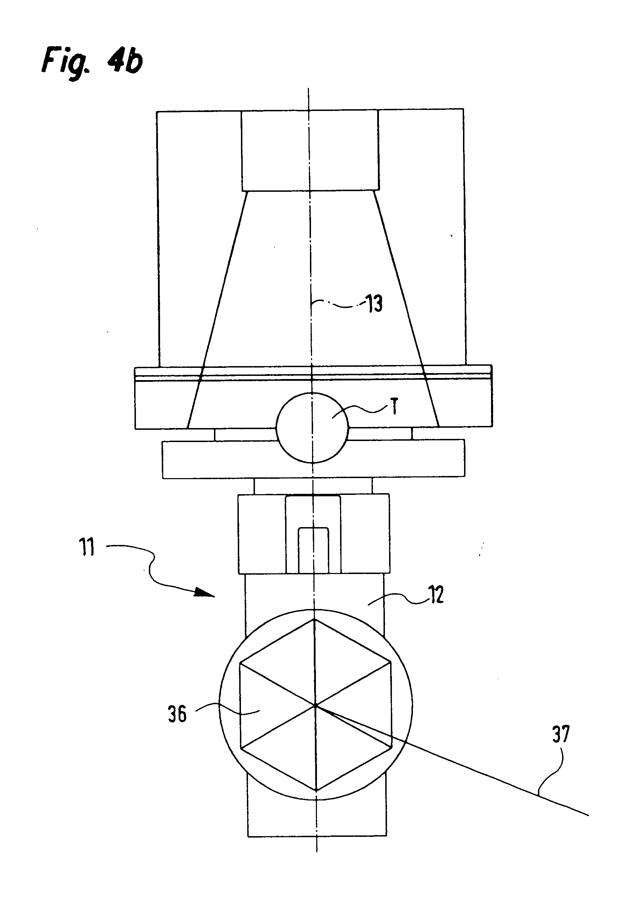

Im unteren Bereich des Messdorns 12 befindet sich ein kugelförmiger Messkörper 27, dessen Ortskoordinaten von den Messtastern 15, 17 und 19 gemessen werden. Der Messtaster 19 ist in Fig. 4 nicht dargestellt. Die Messtaster 15, 17 und 19 weisen einen Messbolzen 29 auf. In der Längsachse des Messbolzens 29 ist ein Ferritstab 31 angeordnet und fest mit dem Messbolzen 29 verbunden. Der Ferritstab 31 taucht in eine Spule 33 ein. Je nach Eintauchtiefe des Ferritstabs 31 in die Spule 33 ändert sich deren Induktivität. Über die Induktivität der Spule 33 kann somit die Position des Messbolzens 29 bestimmt werden. Konzentrisch zur Längsachse des Messbolzens 29 ist eine starr mit dem Messdorn 12 verbundene Führungshülse 35 angeordnet, auf welcher der Messbolzen 29 über eine Kugelführung geführt wird. Da die Lagerung des Messbolzens 29 konzentrisch zu der Spule 33 und dem Ferritstab 31 angeordnet ist, ergibt sich eine sehr kurze Baulänge der erfindungsgemäßen Messtaster 15, 17 und 19, was den Einsatz der erfindungsgemäßen Abtasteinrichtung 11 auch unter beengten räumlichen Verhältnissen ermöglicht.

In Fig. 4b ist eine zweite Ausführungsform einer erfindungsgemäßen Abtasteinrichtung 11 dargestellt. Anstelle der Messtaster 15, 17, und 19 wird ein dreidimensional messendes Lasermessgerät verwendet. Im oberen Bereich des Messdorns 12 sind eine oder mehrere Tripel-Reflektoren 36 angeordnet, welche einen von einer ortsfesten, in Fig. 4b nicht dargestellten, Laserquelle ausgesandten Laserstrahl 37 reflektieren. Die Laserquelle führt den Laserstrahl 37 dem Tripel-Reflektor 36 nach, so dass aus der Richtung des Laserstrahls 37 und dem Abstand zwischen Laserquelle und Spiegel 36 der Ort des Tripel-Reflektors 36 berechnet werden kann. Zusammen mit der von den in Fig. 4b nicht dargestellten Neigungssensoren der Abtasteinrichtung 11 ermittelten Richtung der Drehachse 13 der Werkzeugspindel 7 kann der Ort des Werkzeugträgerbezugspunkts T bestimmt werden.

Alle in der Zeichnung, der Beschreibung und den Patentansprüchen beschriebenen Merkmale können sowohl einzeln als auch in beliebiger Kombination miteinander erfindungswesentlich sein.

## Patentansprüche

1. Abtasteinrichtung, mit einer Aufnahme (21) und mit einem Messdorn (12), **dadurch gekennzeichnet, dass** in dem Messdorn (12) rechtwinklig zur Drehachse (13) der Werkzeugspindel (7) zwei Neigungssensoren (23, 25) angeordnet sind, dass die Neigungssensoren (23, 25) zueinander rechtwinklig angeordnet sind, und dass an dem Messdorn (12) eine Einrichtung (15, 17, 19, 36) zum Messen der Position der Abtasteinrichtung (11) vorgesehen ist.

2. Abtasteinrichtung nach Anspruch 1, **dadurch gekennzeichnet, dass** die Einrichtung zum Messen der Position der Abtasteinrichtung (11) aus drei Messtastern (15, 17, 19) besteht, und dass die Messtaster (15, 17, 19) zueinander rechtwinklig angeordnet sind.

3. Abtasteinrichtung nach Anspruch 2, **dadurch gekennzeichnet, dass** der Messbolzen (29) der Messtaster (15, 17, 19) konzentrisch zu einer Längenmesseinrichtung (31, 33) angeordnet ist.

4. Abtasteinrichtung nach Anspruch 3, **dadurch gekennzeichnet, dass** der Messbolzen (29) einen fest mit dem Messbolzen (29) verbundenen Ferritstab (31) aufweist, und dass der Ferritstab (31) in eine Spule (33) eintaucht

5. Abtasteinrichtung nach einem der Ansprüche 3 bis 5, **dadurch gekennzeichnet, dass** Konzentrisch zu einer Längsachse des Messbolzens (29) eine starr mit dem Messdorn 12 verbundene Führungshülse (35) angeordnet ist, und dass der Messbolzen (29) auf der Führungshülse (35) über eine Kugelführung geführt wird.

6. Abtasteinrichtung nach einem der vorhergehenden Ansprüche, **dadurch gekennzeichnet, dass** die Einrichtung zum Messen der Position der Abtasteinrichtung (11) aus einem mit einer ortsfest installierten Laserquelle zusammenwirkenden Tripel-Reflektor (36) besteht.
